# FASCICULE DE BREVET EUROPEEN

(11) **EP 3 412 506 B1**
(45) Date de publication et mention de la délivrance du brevet: **11.03.2020**
(21) Numéro de dépôt: 18173793.3
(22) Date de dépôt: 23.05.2018
(51) Int. Cl.: B60Q 1/04, E05F 5/02

(54) **BLOC OPTIQUE POUR VEHICULE AUTOMOBILE**
OPTISCHER BLOCK FÜR KRAFTFAHRZEUG
OPTICAL UNIT FOR MOTOR VEHICLE

(30) Priorité: 08.06.2017 FR 1755083
(43) Date de publication de la demande: 12.12.2018
(73) Titulaire: PSA Automobiles SA, 78300 Poissy (FR)
(72) Inventeur: PERON, RODOLPHE, 95220 HERBLAY (FR)

(56) Documents cités:
- WO-A2-2012/122968
- FR-A1- 2 710 592
- FR-A1- 2 870 922
- FR-A1- 2 929 668
- GB-A- 2 506 206
- JP-A- 2006 027 488
- JP-A- 2015 098 256
- US-A1- 2008 290 692
- US-B1- 8 720 975

## Description

L'invention concerne, de façon générale, le domaine des blocs optiques pour véhicules automobiles et se rapporte plus particulièrement à un bloc optique sécurisé permettant d'absorber une partie de l'énergie résultant d'un choc avec un piéton, notamment sa tête, afin de réduire les conséquences d'un tel choc sur ledit piéton.

Un véhicule automobile comprend de manière connue des blocs optiques ou projecteurs montés à l'avant et à l'arrière dudit véhicule. Ces blocs optiques permettent, d'une part, d'éclairer l'environnement du véhicule pour améliorer la visibilité du conducteur, notamment en condition nocturne, et, d'autre part, de signaliser la position du véhicule aux autres usagers de la route.

Chaque bloc optique avant comprend une ou plusieurs pattes de fixation permettant de fixer le bloc optique sur le véhicule. Dans une forme connue de bloc optique avant, une patte de fixation supérieure permet de fixer le bloc optique à une aile avant du véhicule à l'aide d'une vis et d'un écrou.

Cette patte de fixation supérieure doit être dimensionnée de manière à répondre à des normes de sécurité, telles que la norme EuroNCAP, exigeant de limiter la résistance à l'avant du véhicule afin de limiter les dommages aussi bien sur le véhicule lui-même que sur son environnement. En particulier, il est souhaitable de limiter les dommages faits à un piéton en cas de choc entre le bloc optique et ledit piéton, notamment sa tête.

On connait, par le document FR2844757, un bloc optique avant comportant des pattes de fixation sécables au choc. Toutefois, dans cette solution, la patte de fixation supérieure n'est pas adaptée pour recevoir un choc par le capot lors de la fermeture de ce dernier, ce qui peut endommager le bloc optique et présente un premier inconvénient. De plus, les pattes de fixation sécables n'autorisent qu'un enfoncement du bloc optique dans une direction, ce qui ne limite pas suffisamment les dommages fait à la tête d'un piéton lors d'un choc et présente un deuxième inconvénient.

Le document US 8 720 975 B1 divulgue un autre type de bloc optique avant.

L'invention vise donc à résoudre ces inconvénients en proposant un bloc optique avant qui permette une déformation efficace en cas de choc, notamment avec la tête d'un piéton, tout en permettant d'absorber une partie de l'énergie transférée lors de la fermeture du capot du véhicule.

Pour parvenir à ce résultat, la présente invention concerne un bloc optique pour véhicule automobile selon la revendication 1, ledit bloc optique comprenant notamment un boîtier, adapté pour recevoir au moins une source de lumière, et au moins une patte de fixation reliée audit boitier et comprenant une zone de fixation à la structure d'un véhicule automobile, une zone d'absorption adaptée pour recevoir une partie de l'énergie transférée lors de la fermeture du capot dudit véhicule et une pluralité de branches de liaison de la patte de fixation au boitier aptes à se déformer lors d'un choc subi par ledit bloc optique.

La pluralité de branches de liaison permet un déplacement en translation et/ou en rotation de quelques millimètres du boitier du bloc optique lors d'un choc avec une entité extérieure telle que, par exemple, la tête d'un piéton. La pluralité de branches de liaison constitue notamment une zone fusible pouvant rompre aisément en cas de choc violent subit par le bloc optique, notamment afin de limiter les dommages sur la tête d'un piéton. De plus, la pluralité de branches de liaison confère une flexibilité à la patte de liaison qui permet avantageusement à la zone d'absorption d'absorber efficacement une partie de l'énergie transférée lors de la fermeture du capot du véhicule.

Selon l'invention, le boitier comprenant un corps réalisé en un matériau plastique, la patte de fixation et ledit corps sont issus de même matière. Toujours selon l'invention, au moins l'une des branches de liaison de la pluralité de branches de liaison comprend une entaille permettant de faciliter la torsion voire la rupture de la patte de fixation.

De préférence, chaque branche de liaison de la pluralité de branches de liaison comprend une entaille afin que la patte de fixation rompe aisément en cas de choc violent.

Dans une forme de réalisation, au moins une branche de liaison de la pluralité de branches de liaison relie le boitier et la zone de fixation et au moins une branche de liaison de la pluralité de branches de liaison relie le boitier et la zone d'absorption. Cela permet de fixer solidement le boitier à la zone de fixation et à la zone d'absorption en l'absence de choc sur le bloc optique.

Selon un aspect de l'invention, la pluralité de branches de liaison est dimensionnée pour rompre lorsqu'une force supérieure ou égale à 40 daN est appliquée parallèlement à un axe vertical lorsque le bloc optique est monté sur un véhicule automobile.

Selon un autre aspect de l'invention, la pluralité de branches de liaison est dimensionnée pour rompre lorsqu'une force supérieure ou égale à 60 daN est exercée parallèlement à un axe longitudinal du bloc optique, orthogonal à un axe vertical, lorsque le bloc optique est monté sur un véhicule automobile.

Avantageusement, la zone d'absorption comprend une portion centrale, constituant une butée pour un capot de véhicule automobile, et une portion périphérique, au moins une lumière étant formée entre ladite portion centrale et ladite portion périphérique de sorte que la portion centrale rompe lorsqu'elle est soumise à un effort trop important de claquement du capot du véhicule lorsque le bloc optique est monté sur un véhicule automobile.

Dans une forme de réalisation, la portion centrale est un disque relié à la portion périphérique par au moins deux éléments de liaison, de préférence quatre.

Avantageusement, la zone d'absorption est configurée pour que la portion centrale se rompe lorsqu'une force supérieure ou égale à 35 daN, générée par le claquement d'un capot de voiture, est appliquée à la portion centrale.

L'invention concerne également un véhicule automobile comprenant une structure et au moins un bloc optique tel que décrit précédemment, ledit bloc optique étant fixé à ladite structure du véhicule automobile, par exemple au niveau de l'aile avant, du bloc moteur ou du châssis du véhicule.

D'autres caractéristiques et avantages de l'invention apparaîtront à la lecture de la description détaillée des modes de réalisation de l'invention, donnés à titre d'exemple uniquement, et en référence aux dessins qui montrent :
- la figure 1, un schéma d'une forme de réalisation du bloc optique selon l'invention,
- la figure 2, un schéma de la patte de fixation supérieure du bloc optique de la figure 1,
- la figure 3, un autre schéma de la patte de fixation de la figure 2, et
- la figure 4, une vue partielle rapprochée des branches de liaison de la patte de fixation des figures 2 et 3.

Dans ce qui va suivre, les modes de réalisation décrits s'attachent plus particulièrement à une mise en œuvre du dispositif selon l'invention au sein d'un véhicule automobile. Cependant, toute mise en œuvre dans un contexte différent, en particulier dans tout type de véhicule, est également visée par la présente invention.

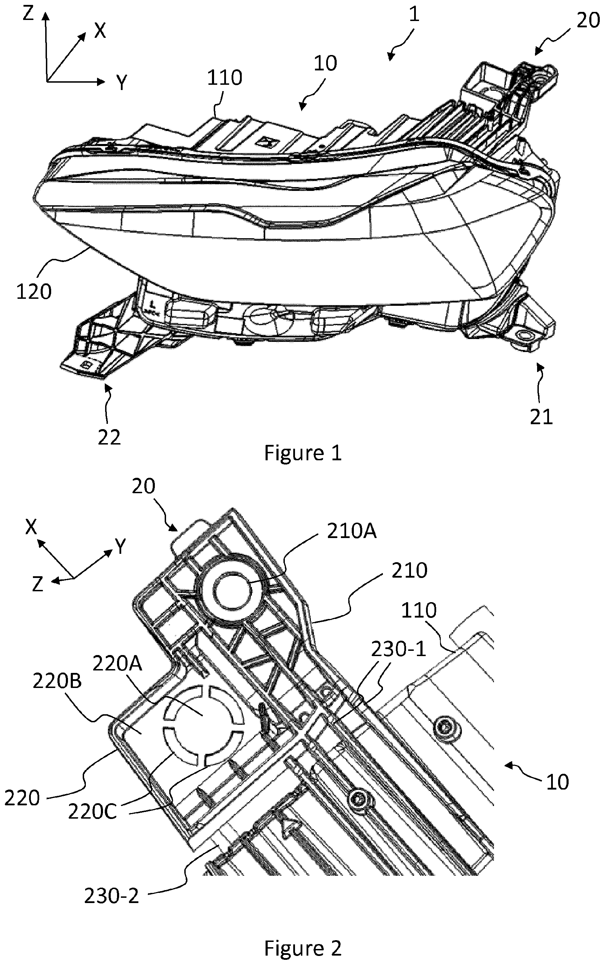

Les figures 1 à 4 représentent un bloc optique 1 destiné à être monté sur la structure de support d'un véhicule automobile (non représenté), par exemple sur une aile avant dudit véhicule ou toute autre élément adapté de la structure du véhicule. Le bloc optique 1 se présente sous la forme d'un élément allongé s'étendant selon un axe longitudinal.

Sur ces figures, on définit un repère orthogonal (X, Y, Z) où :
- X est un premier axe qui est parallèle à l'axe longitudinal du véhicule automobile lorsque le bloc optique 1 est monté sur ledit véhicule,
- Y est un deuxième axe qui est parallèle à l'axe longitudinal du bloc optique 1,
- Z est un troisième axe qui est parallèle à la verticale terrestre.

Dans l'exemple de la figure 1, le bloc optique 1 comprend tout d'abord un boitier 10 et une pluralité de pattes de fixation 20, 21, 22 reliées audit boitier 10 afin de fixer le bloc optique 1 sur la structure d'un véhicule automobile.

En référence à la figure 1, le boîtier 10 comprend un corps 110, par exemple réalisé en un matériau plastique, sur lequel est montée une paroi 120 transparente, par exemple réalisée en un matériau plastique, de manière à former un espace intérieur apte à recevoir une source de lumière (non représentée). La paroi 120 permet le passage de la lumière produite par la source de lumière afin d'éclairer l'environnement du véhicule, pour aider le conducteur (par exemple en mode « feux de routes ») ou indiquer une direction aux autres usagers de la route (par exemple en mode « indicateur clignotant directionnel »).

Dans cet exemple, le bloc optique 1 comprend une patte de fixation 20 supérieure et deux pattes de fixation 21, 22 inférieures mais il va de soi que le bloc optique 1 pourrait comprendre un nombre différent de pattes de fixation aussi bien supérieures qu'inférieures sans que cela ne limite la portée de la présente invention.

En référence à la figure 2, la patte de fixation 20 supérieure comprend une zone de fixation 210 à la structure d'un véhicule automobile, une zone d'absorption 220 adaptée pour recevoir une partie de l'énergie transférée lors de la fermeture du capot dudit véhicule et une pluralité de branches de liaison 230-1, 230-2 de la patte de fixation 20 au boitier 10 aptes à se déformer lors d'un choc subi par ledit bloc optique 1.

Le corps 110 du boitier 10 et la patte de fixation 20 sont issus de même matière et réalisés en un matériau plastique.

La zone de fixation 210 permet de fixer la patte de fixation 20 sur la structure du véhicule. A cette fin, un orifice 210A est formé dans la zone de fixation 210 afin de permettre le passage d'un élément de fixation, par exemple une vis (non représentée).

La zone d'absorption 220 comprend une portion centrale 220A et une portion périphérique 220B.

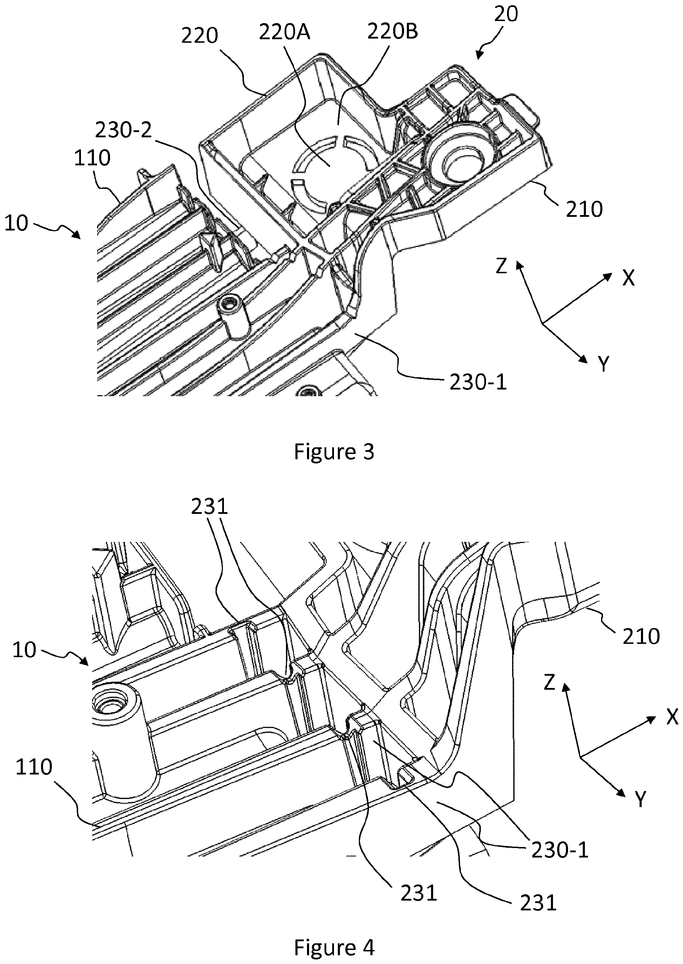

La portion centrale 220A constitue une butée pour le capot du véhicule automobile. Dans l'exemple illustré notamment aux figures 2 et 3, la portion centrale 220A se présente sous la forme d'un disque relié à la portion périphérique par quatre éléments de liaison 220C. Plus précisément, quatre lumières ont été formées entre la zone centrale 220A et la zone périphérique 220B de sorte que la portion centrale 220A rompe lorsqu'elle est soumise à un effort trop important de claquement du capot du véhicule.

Avantageusement, la zone d'absorption 220 est configurée pour que la portion centrale 220A se rompe lorsqu'une force, supérieure ou égale à 35 daN, générée par le claquement d'un capot de voiture, est appliquée à la portion centrale 220A.

La pluralité de branches de liaison 230-1, 230-2 permet de faciliter le déplacement et/ ou la torsion voire la rupture de la patte de fixation 20 en cas de choc d'un élément sur le bloc optique 1 lorsque ce dernier est monté sur le véhicule.

Dans la forme de réalisation illustrée à la figure 2, quatre branches de liaison 230-1 relient le corps 110 du boitier 10 et la zone de fixation 210 et une branche de liaison 230-2 relie le corps 110 du boitier 10 et la zone d'absorption 220.

Comme illustré sur la figure 4, chaque branche de liaison 230-1 reliant le corps 110 à la zone de fixation 210 comprend une entaille 231 afin que la patte de fixation 20 rompe aisément en cas de choc violent. Autrement dit, les branches de liaison 230-1 comprennent chacune une zone de striction au niveau de l'entaille 231, c'est-à-dire que la section de la branche de liaison 230-1 est plus petite au niveau de l'entaille qu'au niveau des autres portions de ladite branche de liaison 230-1.

De préférence, la pluralité de branches de liaison 230-1, 230-2 est dimensionnée pour rompre lorsqu'une force supérieure ou égale à 40 daN est appliquée au bloc optique 1 parallèlement à un axe vertical Z lorsque le bloc optique 1 est monté sur le véhicule automobile.

De préférence encore, la pluralité de branches de liaison 230-1, 230-2 est dimensionnée pour rompre lorsqu'une force supérieure ou égale à 60 daN est exercée parallèlement à un axe longitudinal Y du bloc optique 1, orthogonal à l'axe vertical Z, lorsque le bloc optique 1 est monté sur le véhicule automobile.

Le bloc optique 1 peut ainsi être fixé sur un véhicule automobile sans risque d'affaissement de sa face avant afin de maintenir la qualité perçue, tout en permettant un déplacement du boitier 10 en translation et/ou en rotation de quelques millimètres en cas de choc, notamment par la rupture de la patte de fixation 20. Ceci permet de réduire la résistance du véhicule et ainsi respecter les exigences des normes notamment lors d'un choc avec la tête d'un piéton.

## Revendications

1. Bloc optique (1) pour véhicule automobile, ledit bloc optique (1) comprenant un boîtier (10), adapté pour recevoir au moins une source de lumière, et au moins une patte de fixation (20) reliée audit boitier (10) et comprenant une zone de fixation (210) à la structure d'un véhicule automobile, une zone d'absorption (220) adaptée pour recevoir une partie de l'énergie transférée lors de la fermeture du capot dudit véhicule et une pluralité de branches de liaison (230) de la patte de fixation (20) au boitier (10) aptes à se déformer lors d'un choc subi par ledit bloc optique (1), le bloc optique étant **caractérisé en ce que** le boitier (10) comprend un corps (110) réalisé en un matériau plastique, la patte de fixation (20) et ledit corps (110) sont issus de même matière, et **en ce qu'** au moins l'une des branches de liaison (230) de la pluralité de branches de liaison (230) comprend une entaille (231).

2. Bloc optique (1) selon la revendication précédente, dans lequel chaque branche de liaison (230-1, 230-2) de la pluralité de branches de liaison (230-1, 230-2) comprend une entaille (231).

3. Bloc optique (1) selon l'une des revendications précédentes, dans lequel au moins une branche de liaison (230-1) de la pluralité de branches de liaison (230-1, 230-2) relie le boitier (10) et la zone de fixation (210) et au moins une branche de liaison (230-2) de la pluralité de branches de liaison (230-1, 230-2) relie le boitier (10) et la zone d'absorption (220).

4. Bloc optique (1) selon l'une des revendications précédentes, dans lequel la pluralité de branches de liaison (230-1, 230-2) est dimensionnée pour rompre lorsqu'une force supérieure ou égale à 40 daN est appliquée parallèlement à un axe vertical lorsque le bloc optique (1) est monté sur un véhicule automobile.

5. Bloc optique (1) selon l'une des revendications précédentes, dans lequel la zone d'absorption (220) comprend une portion centrale (220A), étant apte à constituer une butée pour un capot de véhicule automobile, et une portion périphérique (220B), au moins une lumière étant formée entre ladite portion centrale (220A) et ladite portion périphérique (220B).

6. Bloc optique (1) selon la revendication précédente, dans lequel la portion centrale (220A) est un disque relié à la portion périphérique (220B) par au moins deux éléments de liaison (220C).

7. Bloc optique (1) selon l'une des revendications 5 et 6, dans lequel, la zone d'absorption (220) est configurée pour que la portion centrale (220A) se rompe lorsqu'une force supérieure ou égale à 35 daN, générée par le claquement d'un capot de voiture, est appliquée à la portion centrale (220A).

8. Véhicule automobile comprenant une structure et au moins un bloc optique (1) selon l'une des revendications précédentes, ledit bloc optique (1) étant fixé à ladite structure du véhicule automobile.

## Patentansprüche

1. Optischer Block (1) für Kraftfahrzeug, wobei der optische Block (1) ein Gehäuse (10) umfasst, das angepasst ist, um mindestens eine Lichtquelle aufzunehmen, und mindestens eine Befestigungspratze (20), die mit dem Gehäuse (10) verbunden ist, und eine Zone (210) zum Befestigen an der Struktur eines Kraftfahrzeugs, eine Absorptionszone (220), die angepasst ist, um einen Teil der Energie, die bei dem Schließen der Motorhaube des Fahrzeugs übertragen wird, zu empfangen, und eine Vielzahl von Verbindungszweigen (230) der Befestigungspratze (20) an dem Gehäuse (10) umfasst, die geeignet sind, sich bei einem Stoß, den der optische Block (1) erfährt, zu verformen, optischer Block **dadurch gekennzeichnet, dass** das Gehäuse (10) einen Körper (110) umfasst, der aus einem Kunststoffmaterial hergestellt ist, wobei die Befestigungspratze (20) und der Körper (110) aus demselben Stück bestehen, und dass mindestens einer der Verbindungszweige (230) der Vielzahl von Verbindungszweigen (230) eine Kerbe (231) umfasst.

2. Optischer Block (1) nach dem vorstehenden Anspruch, wobei jeder Verbindungszweig (230-1, 230-2) der Vielzahl von Verbindungszweigen (230-1, 230-2) eine Kerbe (231) umfasst.

3. Optischer Block (1) nach einem der vorstehenden Ansprüche, wobei mindestens ein Verbindungszweig (230-1) der Vielzahl von Verbindungszweigen (230-1, 230-2) das Gehäuse (10) und die Befestigungszone (210) verbindet, und mindestens ein Verbindungszweig (230-2) der Vielzahl von Verbindungszweigen (230-1, 230-2) das Gehäuse (10) und die Absorptionszone (220) verbindet.

4. Optischer Block (1) nach einem der vorstehenden Ansprüche, wobei die Vielzahl von Verbindungszweigen (230-1, 230-2) bemessen ist, um zu brechen, wenn eine Kraft größer oder gleich 40 daN parallel zu einer vertikalen Achse angelegt wird, wenn der optische Block (1) auf einem Kraftfahrzeug montiert ist.

5. Optischer Block (1) nach einem der vorstehenden Ansprüche, wobei die Absorptionszone (220) einen zentralen Abschnitt (220A) umfasst, der geeignet ist, einen Anschlag für eine Kraftfahrzeugmotorhaube zu bilden, und einen Umfangsabschnitt (220B), wobei mindestens ein Langloch zwischen dem zentralen Abschnitt (220A) und dem Umfangsabschnitt (220B) gebildet ist.

6. Optischer Block (1) nach dem vorstehenden Anspruch, wobei der zentrale Abschnitt (220A) eine Scheibe ist, die mit dem Umfangsabschnitt (220B) durch mindestens zwei Verbindungselemente (220C) verbunden ist.

7. Optischer Block (1) nach einem der Ansprüche 5 und 6, wobei die Absorptionszone (220) konfiguriert ist damit der zentrale Abschnitt (220A) bricht, wenn eine Kraft größer oder gleich 35 daN, die durch das Zuschlagen einer Fahrzeugmotorhaube erzeugt wird, an den zentralen Abschnitt (220A) angelegt wird.

8. Kraftfahrzeug, das eine Struktur und mindestens einen Scheinwerfereinsatz (1) nach einem der vorstehenden Ansprüche umfasst, wobei der optische Block (1) an der Struktur des Kraftfahrzeugs befestigt ist.

## Claims

1. An optical unit (1) for a motor vehicle, said optical unit (1) including casing (10), adapted to receive at least one light source, and at least one attachment tab (20) connected to said casing (10) and including an attachment zone (210) to the structure of a motor vehicle, an absorption zone (220) adapted to receive a portion of the energy transferred during the closing of the bonnet of said vehicle, and a plurality of connecting branches (230) of the attachment tab (20) to the casing (10) able to deform during an impact undergone by said optical unit (1), the optical unit being **characterized in that** the casing (10) includes a body (110) made of a plastic material, the attachment tab (20) and said body (110) are made from the same material, and **in that** at least one of the connecting branches (230) of the plurality of connecting branches (230) includes a notch (231).

2. The optical unit (1) according to the preceding claim, in which each connecting branch (230-1, 230-2) of the plurality of connecting branches (230-1, 230-2) includes a notch (231).

3. The optical unit (1) according to one of the preceding claims, in which at least one connecting branch (230-1) of the plurality of connecting branches (230-1, 230-2) connects the casing (10) and the attachment zone (210) and at least one connecting branch (230-2) of the plurality of connecting branches (230-1, 230-2) connects the casing (10) and the absorption zone (220) .

4. The optical unit (1) according to one of the preceding claims, in which the plurality of connecting branches (230-1, 230-2) is dimensioned to break when a force greater than or equal to 40 daN is applied parallel to a vertical axis when the optical unit (1) is mounted on a motor vehicle.

5. The optical unit (1) according to one of the preceding claims, in which the absorption zone (220) includes a central portion (220A), being able to constitute a stop for a motor vehicle bonnet, and a peripheral portion (220B), at least one light being formed between said central portion (220A) and said peripheral portion (220B).

6. The optical unit (1) according to the preceding claim, in which the central portion (220A) is a disc connected to the peripheral portion (220B) by at least two connecting elements (220C).

7. The optical unit (1) according to one of Claims 5 and 6, in which the absorption zone (220) is configured so that the central portion (220A) breaks when a force greater than or equal to 35 daN, generated by the slamming of a car bonnet, is applied to the central portion (220A).

8. A motor vehicle including a structure and at least one optical unit (1) according to one of the preceding claims, said optical unit (1) being attached to said structure of the motor vehicle.
